# EUROPEAN PATENT SPECIFICATION

(11) **EP 2 839 529 B1**
(45) Date of publication and mention of the grant of the patent: **25.07.2018**
(21) Application number: 13777797.5
(22) Date of filing: 17.04.2013
(51) Int. Cl.: H01M 10/054, H01M 4/139, H01M 4/1397, H01M 4/58, H01M 10/052, H01M 10/0525, H01M 10/0565, H01M 10/0566, H01M 4/04, H01M 4/136, H01M 4/62

(54) **ALKALI AND ALKALINE-EARTH ION BATTERIES WITH HEXACYANOMETALLATE CATHODE AND NON-METAL ANODE**
ALKALI- UND ERDALKALIMETALLIONENBATTERIEN MIT HEXACYANOMETALLATKATHODE UND NICHTMETALLISCHER ANODE
BATTERIE AUX IONS DE MÉTAUX ALCALINS ET ALCALINOTERREUX COMPRENANT UNE CATHODE HÉXACYANOMÉTALLATE ET UNE ANODE NON MÉTALLIQUE

(30) Priority: 17.04.2012 US 201213449195; 14.06.2012 US 201213523694
(43) Date of publication of application: 25.02.2015
(73) Proprietor: Sharp Kabushiki Kaisha, Osaka-shi, Osaka 545-8522 (JP)
(72) Inventor: LU, Yuhao, Camas, Washington 98607 (US); LEE, Jong-Jan, Camas, Washington 98607 (JP); NISHIJIMA, Motoaki, Osaka-shi, Osaka 545-8522 (JP); KAKIMOTO, Seizoh, Osaka-shi, Osaka 545-8522 (JP)
(74) Representative: Müller Hoffmann & Partner
(86) International application number: PCT/JP2013/061961
(87) International publication number: WO 2013/157660

(56) References cited:
- WO-A1-2011/030790
- WO-A1-2012/056765
- JP-A- H1 021 898
- JP-A- 2001 048 527
- JP-A- 2002 246 020
- JP-A- 2012 046 399
- JP-B2- H0 527 227
- US-A1- 2011 268 963
- COLIN D. WESSELLS ET AL: "The Effect of Insertion Species on Nanostructured Open Framework Hexacyanoferrate Battery Electrodes", JOURNAL OF THE ELECTROCHEMICAL SOCIETY, vol. 159, no. 2, 19 December 2011 (2011-12-19), page A98, XP055092040, ISSN: 0013-4651, DOI: 10.1149/2.060202jes
- COLIN D WESSELLS ET AL: "Copper hexacyanoferrate battery electrodes with long cycle life and high power", NATURE COMMUNICATIONS, NATURE PUBLISHING GROUP, UNITED KINGDOM, vol. 2, no. artcle 550, 22 November 2011 (2011-11-22), XP008146363, ISSN: 2041-1723, DOI: 10.1038/NCOMMS1563
- EFTEKHARI A: "Potassium secondary cell based on Prussian blue cathode", JOURNAL OF POWER SOURCES, ELSEVIER SA, CH, vol. 126, no. 1-2, 16 February 2004 (2004-02-16), pages 221-228, XP004487899, ISSN: 0378-7753, DOI: 10.1016/J.JPOWSOUR.2003.08.007
- ALI EFTEKHARI: 'Potassium secondary cell based on Prussian blue cathode' JOURNAL OF POWER SOURCES vol. 126, no. 1-2, 16 February 2004, pages 221 - 228, XP004487899

## Description

### Technical Field

This invention generally relates to electrochemical cells and, more particularly, to an alkali or alkaline-earth ion battery made from a hexacyanometallate cathode and non-metal anode.

This invention also relates to electrochemical cells and, more particularly, to method for forming a carbon-hexacyanometallate battery electrode.

### Background Art

A battery is an electrochemical cell through which chemical energy and electric energy can be converted back and forth. The energy density of a battery is determined by its voltage and charge capacity. Lithium has the most negative potential of -3.04 V vs. H₂/H⁺, and has the highest gravimetric capacity of 3860 milli-amp-hours per gram (mAh/g). Due to their high energy densities, lithium-ion batteries have led the portable electronics revolution. However, the high cost of lithium metal renders doubtful the commercialization of lithium batteries as large scale energy storage devices. Further, the demand for lithium and its reserve as a mineral have raised the need to build other types metal-ion batteries as an alternative.

Lithium-ion (Li-ion) batteries employ lithium storage compounds as the positive (cathode) and negative (anode) electrode materials. As a battery is cycled, lithium ions (Li⁺) exchange between the positive and negative electrodes. Li-ion batteries have been referred to as rocking chair batteries because the lithium ions "rock" back and forth between the positive and negative electrodes as the cells are charged and discharged. The positive electrode (cathode) materials is typically a metal oxide with a layered structure, such as lithium cobalt oxide (LiCoO₂), or a material having a tunneled structure, such as lithium manganese oxide (LiMn₂O₄), on an aluminum current collector. The negative electrode (anode) material is typically a graphitic carbon, also a layered material, on a copper current collector. In the charge-discharge process, lithium ions are inserted into, or extracted from interstitial spaces of the active materials.

Similar to the lithium-ion batteries, metal-ion batteries use the metal-ion host compounds as their electrode materials in which metal-ions can move easily and reversibly. As for a Li⁺-ion, it has one of the smallest radii of all metal ions and is compatible with the interstitial spaces of many materials, such as the layered LiCoO₂, olivine-structured LiFePO₄, spinel-structured LiMn₂O₄, and so on. Other metal ions, such as Na⁺, K⁺, Mg²⁺, Al³⁺, Zn²⁺, etc., with large sizes, severely distort Li-based intercalation compounds and ruin their structures in several charge/discharge cycles. Therefore, new materials with large interstitial spaces would have to be used to host such metal-ions in a metal-ion battery.

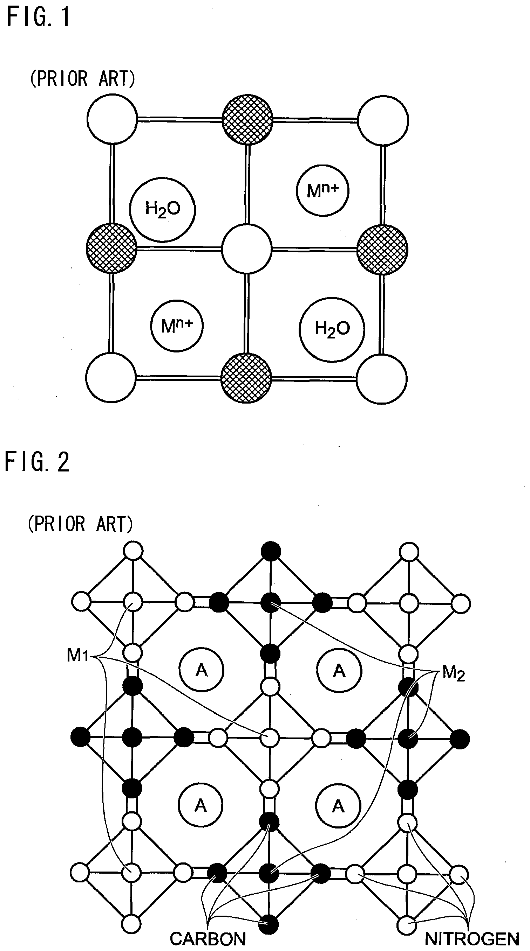

Fig. 1 depicts the framework for an electrode material with large interstitial spaces in a metal-ion battery (prior art). It is inevitable that the large interstitial spaces in these materials readily absorb water molecules and impure ions, as shown. Water molecules also occupy lattices positions in the electrode material. Although these open spaces are very suitable for the intercalation of metal-ions with large sizes, the water molecules and impure ions degrade the electrochemical performance. In this example, Prussian blue analogues (PBs) with cubic/tetragonal/hexagonal framework have open "zeolytic" lattices that permit Na⁺/K⁺ -ions to move easily and reversibly in the framework.

Fig. 2 demonstrates the crystal structure of Prussian blue and its analogues (prior art). Their general molecular formula is AM1M2(CN)₆ .zH₂O, in which tetrahedrally coordinated A site is an alkali or alkaline-earth ion, and M1 and M2 are metal ions. The M1 and M2 metals are arranged in a three-dimensional checkerboard pattern and shown in a two-dimensional pattern. The crystal structure is analogous to that of the ABX₃ perovskite. M1 and M2 metal ions are in ordered arrangement on the B sites. The M1 ions are octahedrally coordinated to the nitrogen ends of the CN⁻ groups, and the M2 ions to their carbon ends. The M1 and M2 ions are connected by the C≡N to form the Prussian blue framework with large interstitial spaces.

The ratio of M1 and M2 may be an arbitrary number. The cyanide ligands (C≡N) octahedrally coordinate M1 and M2 to constitute a cubic framework that has a large interstitial space. The metal-ions or molecules of 'A' can locate in the interstitial space and balance the local charge. Although the molecular ratio for A:M1:M1:H₂O in Prussian blue and its analogues is not precisely 1:1:1:0, the general molecular formula of AM1M2(CN)₆ is used herein for simplicity. The typical compounds of AM1M2(CN)₆ include Prussian white (K₂Fe(II)Fe(II)(CN)₆), Prussian blue (KFe(II)Fe(III)(CN)₆), Berlin green (Fe(III)Fe(III)(CN)₆) and their analogues. The bond dipole moment of C≡N is around 3.0 Debye, which makes the ordering of the M1 and M2 ions with different spin-states in the framework. The material of AM1M2(CN)₆ has demonstrated a variety of interesting functions in optics, magnetic, and electrochemistry.

In an electrochemical cell with AM1M2(CN)₆ as an electrode component, the electrochemical reaction can take place only if (1) a redox couple is in the structure, (2) ions can transport in/out of the structure, and (3) electrons can transport to balance the charge neutrality. For example, the electrochemical reaction taking place in Prussian blue can be expressed as follows:

KFe(II)Fe(III)(CN)₆ + K⁺ + e⁻ → K₂Fe(II)Fe(II)(CN)₆.

In Prussian blue, the redox couple is Fe²⁺/Fe³⁺. In the reduction reaction, the Fe³⁺ ion obtains an electron and reduces to Fe²⁺, and a potassium-ion moves to the interstitial space of the compound to balance the charge. Once the ion diffusion or electron conduction becomes very slow, the reaction voltage departs from equilibrium (overpotential) and gives V = V_{eq} - Vₒᵥₑᵣ, in which 'V_{eq}' is the equilibrium potential of the electrochemical reaction and 'Vₒᵥₑᵣ' is the overpotential. Slower ion or electron transport leads to a high overpotential and a low reaction voltage. For a battery, its energy is E = V×I =(V_{eq} - Vₒᵥₑᵣ) ×I, where 'I' is the current. A large overpotential and small current lead to the poor performance of the electrochemical reaction.

The AM1M2(CN)₆ material has a large interstitial space in which ions can easily move in and out of the lattice. Ion transport is not a limiting factor affecting the kinetic parameters of the electrochemical reaction. On the other hand, AM1M2(CN)₆ has a wide band gap between the valence and conduction bands. This means that the AM1M2(CN)₆ is a very poor electronic conductor. The dried Prussian blue, for example, is an insulator, and Prussian white and Berlin green are semiconductors. The slow electronic transport along the skeleton of M1-N≡C-M2 results in poor electrochemical performance in a system containing AM1M2(CN)₆.

The large interstitial sites may host the large sized alkali or alkaline-earth ions (A). Water molecules may also occupy lattice positions in the PB analogues. The ion channels connecting the interstitial sites are similar in size to solvated alkali ions such as sodium, potassium, and alkaline-earth ions such as magnesium and calcium, allowing rapid transport of these ions throughout the lattice. Therefore, PB is a good choice for an electrode material in sodium/potassium/magnesium/calcium-ion batteries. Nonetheless, thermogravimetric analysis (TG) suggests that every PB molecule contains four to six water molecules. The occupation of water and impure ions in these materials definitely reduces the spaces to host the metal-ions and leads to the reduced capacity of these electrode materials. Therefore, KCuFe(CN)₆ has a theoretical capacity of 85.2 mAh/g, but its practical capacity is smaller than 60 mAh/g. In addition, water may react with the intercalated metal-ions and decrease the coulombic and energy efficiencies of the metal-ion batteries. Up to now, no method has been reported to remove the water and impure ions from the large interstitial spaces and lattice positions of the hexacyanometallate electrode materials for metal-ions batteries. As a result, most metal-ions batteries with a hexacyanometallate electrode use an aqueous solution as an electrolyte. These batteries have small specific capacities and low voltages.

The open framework structure of the transition metal hexacyanometallates offers a faster and reversible intercalation process for alkali and alkaline-earth ions (Aₓ). In a metal-ion battery structure, the metal ions need to be stored in either the anode or cathode electrode before assembly. In the case of a Li-ion battery with LiCoO₂, LiFePO₄, and LiMn₂O₄ cathodes, the Li ions are stored in the cathode and the anode is carbon. Therefore, these batteries are assembled in a discharged state. These batteries need to be run through a charge cycle, to move the Li ions to the carbon anode, before they have any power for discharge. In the case of Li-S, Li-air and Na-S batteries, the metal ions are stored in anode. Actually, these anodes are made of Li and Na metals. These batteries are assembled in the charged state - meaning the battery can discharge immediately after assembly. Since alkali (e.g., Li, Na, and K), and other alkaline-earth (e.g., Mg and Ca) metals are very reactive with water vapor and oxygen, the manufacturing cost for such a battery would be prohibitively high, as the manufacturing has to be done in controlled environment.

In the case of sodium-ion batteries and potassium-ion batteries with hexacyanometallates AM1M2(CN)₆ as the cathode materials, it is easy to use a metal anode for the metal-ion battery. For example, a Na-ion battery can be made of a sodium anode and KFe₂(CN)₆ cathode, or a K-ion battery with potassium anode and KFe₂(CN)₆ cathode. However, these batteries must be assembled in controlled environment (H₂O-free, oxygen-free) if a metal anode is used.

It would be advantageous if alkali and alkaline-earth ion batteries could be made with a hexacyanometallate AₓM1M2(CN)₆ cathode and a non-metal anode.

It would be advantageous if electron transport could be improved in a AM1M2(CN)₆ battery electrode.

### Summary of Invention

Described herein is a battery as disclosed in claim 1.

The battery demonstrates high energy, long cycling life and low cost. The battery demonstrates a high voltage due to the use of a non-aqueous electrolyte.

Accordingly, a method is provided for forming a hexacyanometallate battery cathode. The method provides dried hexacyanometallate particles having a chemical formula A'ₙM1ₓM2_{y}(CN)₆ with a Prussian Blue hexacyanometallate crystal structure, including impurities and H2O. A' is an alkali or alkaline-earth cation. M1 is a metal with 2+ or 3+ valance positions. Likewise, M2 is a metal with 2+ or 3+ valance positions. (n) is in the range of 0.5 to 2, x is in the range of 0.5 to 1.5, and y is in the range of 0.5 to 1.5. The hexacyanometallate particles are mixed with a binder and electronic conductor powder in a low boiling point solvent. Drying the mixture forms a A'ₙM1ₓM2_{y}(CN)₆ paste. A metal current collector is coated with the paste, forming a cathode. After drying the paste, the cathode is soaked in an organic first electrolyte including a salt with alkali or alkaline-earth cations, and a first electric field is created in the first electrolyte between the cathode and a first counter electrode. In response to the first electric field, the method simultaneously removes A' cations, impurities, and water molecules from interstitial spaces and lattice positions in the Prussian Blue hexacyanometallate crystal structure. Hexacyanometallate particles, having a chemical formula of A'_{n'}M1ₓM2_{y}(CN)₆, where n' < n, are formed overlying the cathode.

The method then soaks the cathode in an organic second electrolyte including a salt with A cations, where A is an alkali or alkaline-earth cation. In response to creating a second electric field in the second electrolyte between the cathode and a second counter electrode including A elements, A cations are added into the interstitial spaces of the A'_{n'}M1ₓM2_{y}(CN)₆ crystal structure. As a result, a cathode is formed with hexacyanometallate particles having the chemical formula A'_{n'}AₘM1ₓM2_{y}(CN)₆, where m is in a range of 0.5 to 2.

Additional details of the above-described method and a battery with a hexacyanometallate cathode and non-metal anode are presented below.

### Brief Description of Drawings

Fig. 1 depicts the framework for an electrode material with large interstitial spaces in a metal-ion battery (prior art).
Fig. 2 demonstrates the crystal structure of Prussian blue and its analogues (prior art).
Fig. 3 is a partial cross-sectional view of a battery with a hexacyanometallate cathode and non-metal anode.
Fig. 4 is a partial cross-sectional schematic view of a Na-ion battery in the discharge state, with a NaₓM1M2(CN)₆ positive electrode and a non-metal negative electrode separated by a Na⁺-ion permeable membrane.
Figs. 5A through 5C depict three types of battery configurations.
Fig. 6 is a flowchart illustrating a method for forming a hexacyanometallate battery cathode.
Fig. 7 is a flowchart illustrating a method for forming a non-metal battery anode.
Figs. 8A and 8B are schematic drawings depicting different variations of an intimately contacting carbon-hexacyanometallate structure for battery electrode applications.
Figs. 9A and 9B are drawings contrasting electron transport in uncoated and conductor-coated AM1M2(CN)₆ particles.
Fig. 10 is a schematic drawing depicting a one-step hexacyanometallate coating method during AM1M2(CN)₆ synthesis.
Fig. 11 is a drawing depicting a conducting film coating on AM1M1(CN)₆ particles.
Fig. 12 is a flowchart illustrating method for forming a carbon-hexacyanometallate battery electrode in which KFe(II)Fe(III)(CN)6 is used as an example.
Fig. 13 is a flowchart illustrating an alternate method for forming a carbon-hexacyanometallate battery electrode.
Fig. 14 is a flowchart illustrating another variation of a method for forming a carbon-hexacyanometallate battery electrode.
Figs. 15A and 15B are scanning electron microscope (SEM) images of KNiFe(CN)₆.
Figs. 16A and 16B depict, respectively, the charge and discharge behavior of the two batteries.

### Description of Embodiments

### [EMBODIMENT 1]

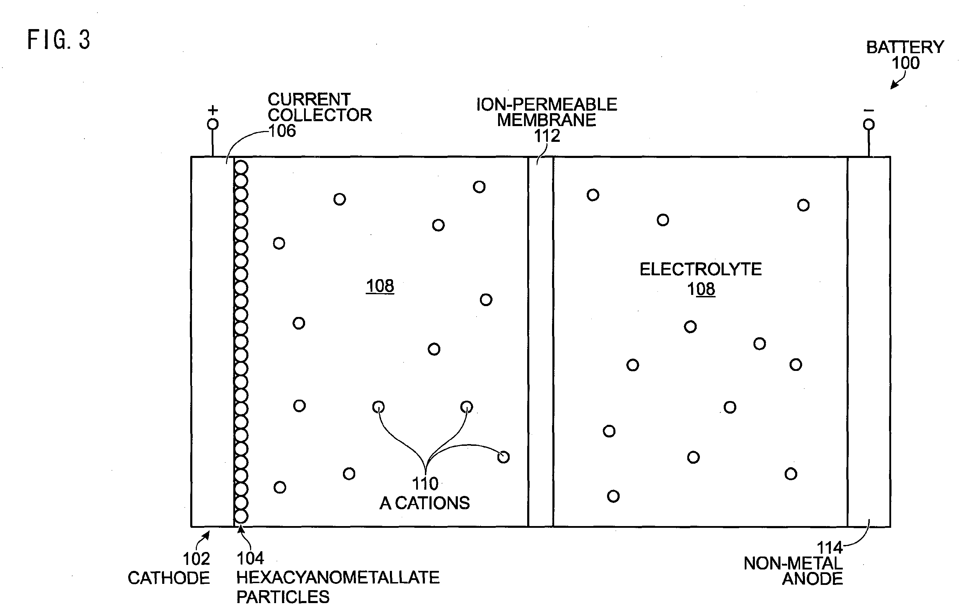

Fig. 3 is a partial cross-sectional view of a battery with a hexacyanometallate cathode and non-metal anode. The battery 100 comprises a cathode 102 with hexacyanometallate particles 104 overlying a current collector 106. The hexacyanometallate particles 104 have the chemical formula A'_{n'}AₘM1ₓM2_{y}(CN)₆, and have a Prussian Blue hexacyanometallate crystal structure (see Fig. 2). The A cations may be either alkali or alkaline-earth cations. Likewise, the A' cations may be either alkali or alkaline-earth cations. For example, the A and A' cations may be Na⁺, K⁺, Mg²⁺, or Ca²⁺. Note: the A and A' cations may be the same or a different material.

M1 is a metal with 2+ or 3+ valance positions. Likewise, M2 is a metal with 2+ or 3+ valance positions. For example, the M1 and M2 metals may be Ti, V, Cr, Mn, Fe, Co, Ni, Cu, Zn, Ca, or Mg. The M1 metal may be the same metal as the M2 metal, or a different metal than the M2 metal.

From the hexacyanometallate formula above, m is in the range of 0.5 to 2, x is in the range of 0.5 to 1.5, y is in the range of 0.5 to 1.5, and n' is in the range of 0 to 2. In one aspect, the cathode hexacyanometallate particles 104 have the chemical formula AₘM1ₓM2_{y}(CN)₆, where n' = 0.

The battery 100 further comprises an electrolyte 108 capable of conducting A cations 110. An ion-permeable membrane 112 separates a non-metal anode 114 from the cathode 102. Some examples of anode materials include carbonaceous materials, oxides, sulfides, nitrides, silicon, composite material including metal nanoparticles with carbonaceous materials, and silicon nanostructures with carbonaceous materials. The electrolyte 108 is a non-aqueous electrolyte.

In one example of the battery, the A cations are Na⁺ cations, the ion permeable membrane 112 is a Na⁺-ion permeable membrane, and the electrolyte 108 is a Na⁺ soluble non-aqueous electrolyte. The general expression for the cathode may be: Na₂M1M2(CN)₆, NaM1M2(CN)₆, NaKM1M2(CN)₆, or M1M2(CN)₆. M1, M2 = Ti, V, Cr, Mn, Fe, Co, Ni, Cu, Zn, Ca, Mg, etc. The ratio of M1 and M2 can be an arbitrary number. For example: Na₂Fe₂(CN)₆, NaFe₂(CN)₆, NaKFe₂(CN)₆, and Fe₂(CN)₆.

In another example, the A cations are K⁺ cations, the ion permeable membrane 112 is a K⁺-ion permeable membrane, and the electrolyte 108 is a K+ soluble non-aqueous electrolyte. The general expression for the cathode materials may be: K₂M1M2(CN)₆, KM1M2(CN)₆, NaKM1M2(CN)₆, or M1M2(CN)₆. M1, M2 = Ti, V, Cr, Mn, Fe, Co, Ni, Cu, Zn, Ca, Mg, etc. The ratio of M1 and M2 can be an arbitrary number. For example: K₂Fe₂(CN)₆, KFe₂(CN)₆, and NaKFe₂(CN)₆.

In another example, the A cations are Mg²⁺ cations, the ion permeable membrane 112 is a Mg²⁺-ion permeable membrane, and the electrolyte 108 is a Mg²⁺ soluble non-aqueous electrolyte. The general expression for the cathode materials may be: MgM1M2(CN)₆, Mg_{0.5}M1M2(CN)₆, or M1M2(CN)₆. M1, M2 = Ti, V, Cr, Mn, Fe, Co, Ni, Cu, Zn, Ca, Mg, etc. The ratio of M1 and M2 can be an arbitrary number. For example: MgFe₂(CN)₆, Mg_{0.5}Fe₂(CN)₆, or Fe₂(CN)₆.

If the A cations are Ca²⁺ cations, the ion permeable membrane 112 is a Ca²⁺-ion permeable membrane, and the electrolyte 108 is a Ca²⁺ soluble non-aqueous electrolyte. The general expression for the Ca-ion battery is the same as the Mg-ion battery, just replacing Mg with Ca in the formulas above.

In one aspect, the cathode hexacyanometallate particles 104 have the chemical formula A'_{n'}M1ₓM2_{y}(CN)₆, where m = 0. The anode 114 includes A cations, and the ion-permeable membrane 112 is permeable to A cations. More explicitly, the ion-permeable membrane 112 is permeable to the A cations used in the anode 114. As used herein, an anode is defined as being a non-metal anode if it is a composite material that includes a metal.

Thus, sodium-ion, potassium-ion, magnesium-ion, and calcium-ion batteries are disclosed with positive (cathode) electrodes of AₓM1M2(CN)₆, negative (anode) electrodes of a non-metal material, an ion-permeable membrane separating the cathode and anode, and an electrolyte. The material, AₓM1M2(CN)₆, demonstrates a framework that consists of a M1-N-C-M2 skeleton and large interstitial space as shown in Fig. 2. M1 and M2 are the same or different metal ions (M1, M2 = Ti, V, Cr, Mn, Fe, Co, Ni, Cu, Zn, Ca, Mg, etc.) and their ratio can be an arbitrary number. A-ions (Na, K, Mg and Ca) can easily and reversibly move in the interstitial space. The anode is a non-metal material. It can be one of carbonaceous materials, oxides, sulfides or nitrides. In order to obtain a high voltage for the battery, a non-aqueous electrolyte, such as organic electrolyte, gel electrolyte, polymer electrolyte, solid electrolyte, etc., may be used in the battery.

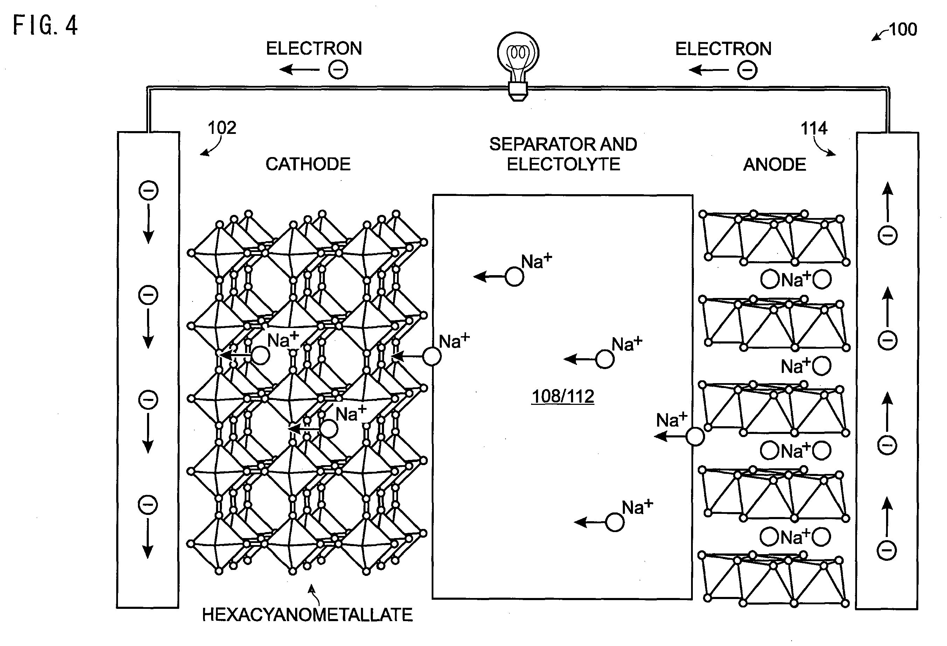

Fig. 4 is a partial cross-sectional schematic view of a Na-ion battery in the discharge state, with a NaₓM1M2(CN)₆ positive electrode 102 and a non-metal negative electrode 114 separated by a Na⁺-ion permeable membrane 112. In order to obtain a high voltage, a Na⁺ soluble non-aqueous solution 108, polymer, or solid electrolyte is used in the Na-ion battery. The non-metal negative electrode 114 is the carbonaceous material, oxide, sulfide, and so on. In the charge/discharge process, Na⁺ ions "rock" back and forth between the positive electrode 102 and negative electrode 114. Similarly, a K-ion battery would have of KₓM1M2(CN)₆ positive electrode, a non-metal negative electrode, and a K⁺-ion permeable membrane separating the cathode and anode electrodes. The battery charge reactions at the cathode and anode are shown below.

For sodium-ion battery, the positive electrode:

NaₓM1M2(CN)₆ → xNa⁺ + M1M2(CN)₆ + xe⁻;

and,
the negative electrode:

Na⁺ + e⁻ + □ → (Na) □;

□ = non-metal negative electrode material.

For potassium-ion battery, the positive electrode:

KₓM1M2(CN)₆ → xK⁺ + M1M2(CN)₆ + xe⁻;

and,
the negative electrode:

K⁺ + e⁻ + □ → (K) □;

□ = non-metal negative electrode material.

For magnesium-ion battery, the positive electrode:

MgₓM1M2(CN)₆ → xMg²⁺ + M1M2(CN)₆ + 2xe⁻;

and,
the negative electrode:

Mg²⁺ + 2e⁻ + □ → (Mg) □;

□ = non-metal negative electrode material.

For calcium-ion battery, the positive electrode:

CaₓM1M2(CN)₆ → xCa²⁺ + M1M2(CN)₆ + 2xe⁻;

and,
the negative electrode:

Ca²⁺ + 2e⁻ + □ → (Ca) □;

□ = non-metal negative electrode material.

In the discharge process, all reactions take place in the reverse direction.

The positive electrode fabrication process flow is as follows. Dried A'ₙM1M2(CN)6 (A' = Na, K, Mg, or Ca) powder with a particle size of 5 nm - 1 µm is mixed with binder, such as polytetrafluoroethylene (PTFE), polyvinylidene fluoride (PVDF), etc., and an electronic conductor powder, in a low boiling point solvent to form a paste. The electronic conductor powder may be carbon black, carbon nanotube, carbon nanowire, grapheme, etc., with particle size of 5 nm - 10 µm. The A'ₙM1M2(CN)₆ (A' = Na, K, Mg, or Ca) powder contains crystal water even after the drying process. The water is not shown in the formula. The composition of the paste is 60 wt.% - 95 wt.% A'ₙM1M2(CN)₆, 0 wt.% - 30 wt.% electronic conductor powder, and 1wt.% - 15 wt.% binder. The paste is coated on a metal foil or mesh (Al, Ti, etc.) that is used as the current collector for the positive electrode. After drying, the electrode undergoes forming process. The forming process includes two steps: the first step is to remove the ions (A'ₙ) and residual water from the A'ₙM1M2(CN)₆ lattice. The second step is to fill Na-ions, K-ions, Mg-ions, or Ca-ions into the A'ₙM1M2(CN)₆ lattice. The Na ions and K ions (Mg ions and Ca ions) occupy the A site and these ions are moved in/out of the A'ₙAₘM1M2(CN)₆ lattice during the discharge/charge cycles. Additional details of the 2-step forming process are provided in parent application entitled, ELECTRODE FORMING PROCESS FOR METAL-ION BATTERY WITH HEXACYANOMETALLATE ELECTRODE, invented by Yuhao Lu et al., Serial No. 13/432,993.

The forming process can be summarized as follows. For simplicity, it is assumed that the ions at the A site are all removed in the first step.

In the first step:

A'ₙM1M2(CN)₆ → nA' + M1M2(CN)₆ + ne⁻;

Residual water is removed: 2H₂O = 4H+ + O₂↑ + 4e⁻.

In the second step:
M1M2(CN)₆ + me- + mNa⁺ → NaₘM1M2(CN)₆ (m ≧ 1) for the sodium-ion battery; or,
M1M2(CN)₆ + me- + mK⁺ → KₘM1M2(CN)₆ (m ≧ 1) for the potassium-ion battery; or,
M1M2(CN)₆ + 2me⁻ + mMg²⁺ → MgₘM1M2(CN)₆ (m ≧ 0.5) for the magnesium-ion battery; or,
M1M2(CN)₆ + 2me⁻ + mCa²⁺ → CaₘM1M2(CN)₆ (m ≧ 0.5) for the calcium-ion battery.

All steps are operated in a water-free environment. After the forming process, the electrode is ready for battery assembly.

Note that the A' ions in cathode material A'ₙM1M2(CN)₆ before the forming process, and the A ions in AₘM1M2(CN)₆ after forming process may be a different material. For example, KₓM1M2(CN)₆ is used before the electrode forming process, and the materials change to NaₓM1M2(CN)₆ or NaₓK_{y}M1M2(CN)₆ after forming process for a Na-ion battery application.

The negative (anode) electrode is fabricated as follows. A dried non-metal negative electrode powder (e.g., carbonaceous material, oxides, or sulfides) is mixed with binder such as PTFE or PVDF, etc., and an electronic conductor powder (carbon black, carbon nanotube, carbon nanowire, grapheme, etc., with particle size of 5 nm - 10 µm) in low boiling point solvent to form a paste. The composition of the paste is 60 wt.% - 95 wt.% non-metal anode, 0 wt.% - 30 wt.% electronic conductor powder, and 1wt.% - 15 wt.% binder. The paste is coated on a metal foil or mesh (Cu, Ti, Ni, etc.) that is used as the current collector for the negative electrode. The negative electrode has a very low potential that can reduce the organic electrolyte to form an ion-permeable layer on the negative electrode so-called solid electrolyte interphase (SEI). The SEI improves the stability of the negative electrode in the ion battery. However, the reduction reaction exhausts the metal-ions (Na⁺, K⁺, Mg²⁺, or Ca²⁺) from the positive electrode, which decreases the capacity of the positive electrode. So a process of forming the electrode is applied to the negative electrode prior to the electrode slitting and battery assembly. The forming process is performed in a water-free environment. The negative electrode (anode) is paired with a counter metal-electrode (e.g., Na, K, Mg, Ca) in an electrochemical cell that includes an organic electrolyte with metal-ions (Na⁺, K⁺, Mg²⁺, Ca²⁺). Upon receiving the electrical field in the electrochemical cell that moves the metal ions toward the negative electrode, the metal-ions insert into or react with the negative electrode. At the same time, the electrolyte reacts with the negative electrode to form a SEI layer that contains metal ions, carbon, oxygen, and hydrogen on the negative electrode surface. Next, in the same electrochemical cell, an opposite electrical field is applied and the metal-ions are de-inserted from the negative electrode. However, the SEI layer is intact. For example, if a Na-ion battery is being formed, the counter electrode in made with Na, and the electrolyte includes Na ions. After the process, an-ion permeable inner layer forms on the electrode.

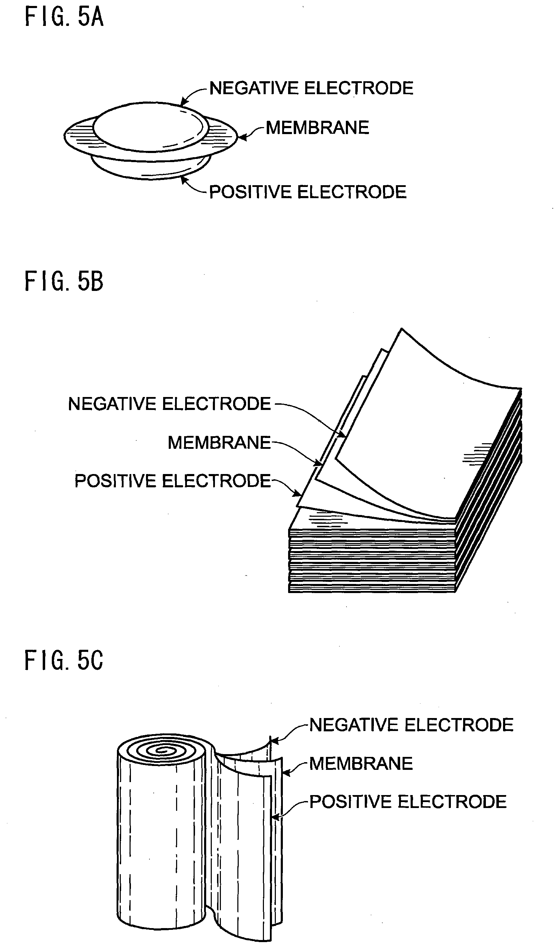

Figs. 5A through 5C depict three types of battery configurations. After the positive electrode and the negative electrode are prepared, the battery can be assembled. A membrane separates the positive and negative electrode. The membrane can be one of polymer, gel, or solid materials. The sandwich electrode assembly can be configured according to the container shape of the battery. The electrode assembly is put into a container. If a liquid solution is needed to help the ion transport, it can be injected into the container. After all the electrodes are thoroughly soaked in electrolyte, the container is sealed.

An all-solid sodium ion-battery or potassium-ion battery, uses a different composition for the electrode fabrication. The all-solid ion battery consists of the positive electrode and the negative electrode separated by an ion-conduct solid electrolyte. For example, in the sodium-ion battery, β-Al₂O₃, NaZr₂(PO₄)₃, Na₄Zr₂(SiO₄)₃ and their derivates can be used as the Na+-ion solid electrolyte. In order to improve the ions transport in the electrode, the 5wt.% - 60 wt.% solid electrolyte powder can be added into the pastes of the positive electrode and the negative electrode to prepare the electrode. After obtaining the electrode, they can be assembled into a battery as described above.

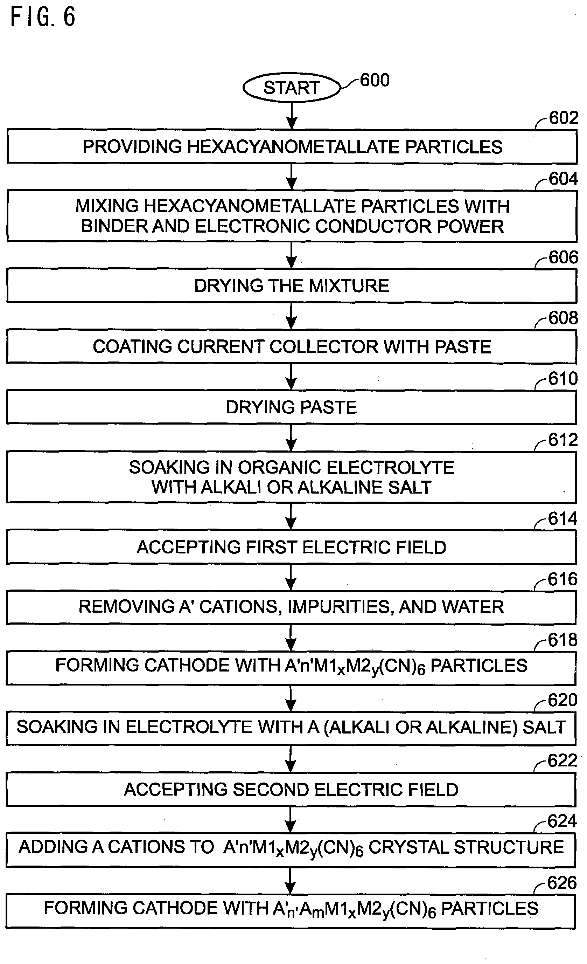

Fig. 6 is a flowchart illustrating a method for forming a hexacyanometallate battery cathode. Although the method is depicted as a sequence of numbered steps for clarity, the numbering does not necessarily dictate the order of the steps. It should be understood that some of these steps may be skipped, performed in parallel, or performed without the requirement of maintaining a strict order of sequence. Generally however, the method follows the numeric order of the depicted steps. The method starts at Step 600.

Step 602 provides dried hexacyanometallate particles having a chemical formula A'ₙM1ₓM2_{y}(CN)₆ with a Prussian Blue hexacyanometallate crystal structure, including impurities and H₂O. A' is either an alkali or alkaline-earth cations, and M1 is a metal with 2+ or 3+ valance positions. Likewise, M2 is a metal 2+ or 3+ valance positions, n is in the range of 0.5 to 2, x is in the range of 0.5 to 1.5, and y is in the range of 0.5 to 1.5. For example, the A' cations may be Na⁺, K⁺, Mg²⁺, or Ca²⁺. The M1 metal may be Ti, V, Cr, Mn, Fe, Co, Ni, Cu, Zn, Ca, or Mg for example. Likewise, the M2 metal may be Ti, V, Cr, Mn, Fe, Co, Ni, Cu, Zn, Ca, or Mg. The M1 may be the same metal as the M2 metal or a different metal than the M2 metal. The dried hexacyanometallate particles typically have a size in the range of 5 nm to 10 microns.

Step 604 mixes the hexacyanometallate particles with a binder and electronic conductor powder in a low boiling point solvent. Some examples of low boiling point solvents include amyl acetate, acetone, diethyl carbonate, dimethyl carbonate, and n-methyl-2-pyrrolidone (NMP). The binder may be PTFE or PVDF, for example. Typically, the electronic conductor powder is carbon black, carbon nanotubes, carbon nanowire, or grapheme, having a particle size in the range of 5 nm to 10 microns.

Step 606 dries the mixture, forming a A'ₙM1ₓM2_{y}(CN)₆ paste. In one aspect, the paste is 60 to 95 weight (wt) % A'ₙM1ₓM2_{y}(CN)₆, 0 to 30 wt % electronic conductor powder, and 1 to 15 wt % binder.

Step 608 coats a metal current collector with the paste, forming a cathode. Step 610 dries the paste. Step 612 soaks the cathode in an organic first electrolyte including a salt with either alkali or alkaline-earth cations. Step 614 accepts a first electric field in the first electrolyte between the cathode and a first counter electrode. In response to the first electric field, Step 616 simultaneously removes A' cations, impurities, and water molecules from interstitial spaces in the Prussian Blue hexacyanometallate crystal structure. Step 618 forms hexacyanometallate particles having a chemical formula of A'_{n'}M1ₓM2_{y}(CN)₆, where n' < n, overlying the cathode.

In one aspect, subsequent to forming A'_{n'}M1ₓM2_{y}(CN)₆ in Step 618, Step 620 soaks the cathode in an organic second electrolyte including a salt with A cations, where A is either an alkali or alkaline-earth cation. Typically, the A cations are Na⁺, K⁺, Mg²⁺, or Ca²⁺. The A cations may be the same material as the A' cations or a different material than the A' cations.

Step 622 accepts a second electric field in the second electrolyte between the cathode and a second counter electrode including A elements. In response to the second electric field, Step 624 adds A cations into the interstitial spaces of the A'ₙM1ₓM2_{y}(CN)₆ crystal structure. Step 626 forms a cathode with hexacyanometallate particles having the chemical formula A'_{n'}AₘM1ₓM2_{y}(CN)₆, where m is in a range of 0.5 to 2. In one aspect, Step 626 forms hexacyanometallate particles with the chemical formula of AₘM1ₓM2_{y}(CN)₆, where n' = 0.

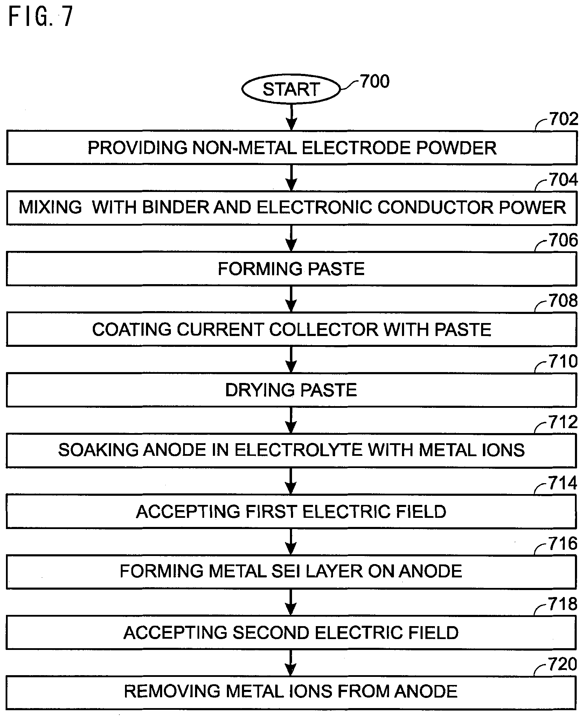

Fig. 7 is a flowchart illustrating a method for forming a non-metal battery anode. The method begins at Step 700. Step 702 provides a dried non-metal electrode powder. Step 704 mixes the dried non-metal electrode powder with a binder and an electronic conductor powder in a low boiling point solvent. Step 706 forms a paste. Step 708 coats a metal current collector with the paste, forming an anode. In Step 710 the paste dries. Step 712 soaks the anode in a first organic electrolyte including a salt with metal ions. Step 714 accepts a first electric field in the electrolyte between the anode and a metal first counter electrode. In response to the first electric field, Step 716 forms a metal solid electrolyte interphase (SEI) layer overlying the anode. In one aspect, the metal SEI layer additionally includes carbon, oxygen, hydrogen, and combinations of the above-mentioned elements.

Subsequent to forming the SEI layer, Step 718 accepts a second electric field, opposite in polarity to the first electric field between the anode and the first counter electrode. Step 720 removes metal ions from the anode while maintaining the SEI layers intact.

In one aspect, soaking the anode in the first organic electrolyte in Step 712 includes soaking in a first organic electrolyte with A cations such as Na, K, Mg, or Ca. Likewise, Step 714 uses a metal first counter electrode that additional includes the A cations used in Step 712. Then, Step 716 forms the anode from a composite that includes the A cations used in Steps 712 and 714.

A battery with a hexacyanometallate cathode and non-metal anode has been provided with an associated cathode fabrication process. Examples of particular materials and process steps have been presented to illustrate the invention. However, the invention is not limited to merely these examples. Other variations and embodiments of the invention will occur to those skilled in the art.

### [EMBODIMENT 2] - not part of the invention

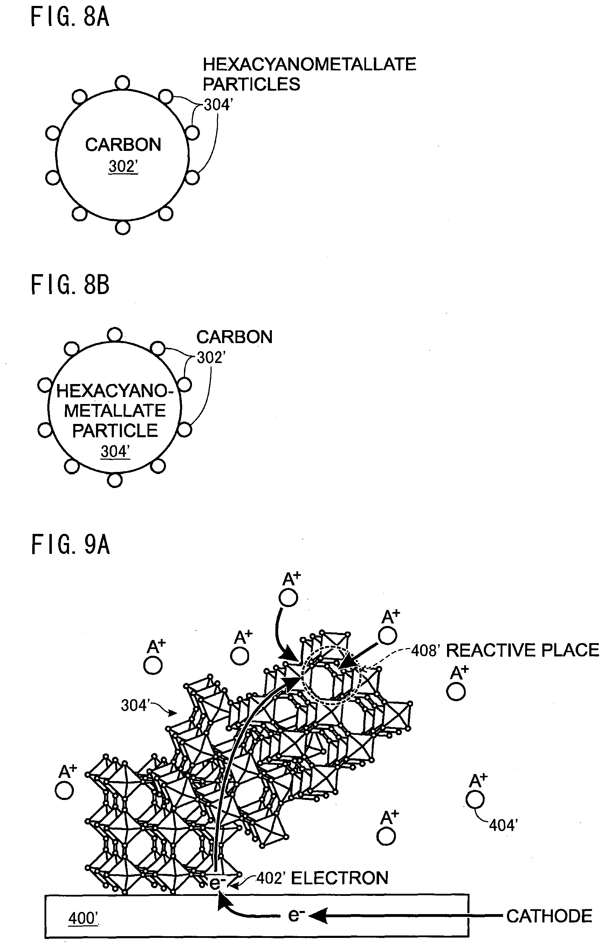

Figs. 8A and 8B are schematic drawings depicting different variations of an intimately contacting carbon-hexacyanometallate structure for battery electrode applications. The structure 300' comprises carbon (C) 302' and hexacyanometallate particles 304'. A bond exists between the carbon 302' and the hexacyanometallate particles 304' that may be either a physical bond, caused by electrostatic attraction, or a chemical bond, caused by chemical reactions. From the hexacyanometallate formula AM1ₓM2_{y}(CN)₆, x is in the range of 0.5 to 1.5, and y is in the range of 0.5 to 1.5.

The carbon 302' may take the form of particles having a size in the range of 10 nanometers (nm) to 20 microns, a carbon sheet, graphene, nanoparticles (less than 10 nm), nanotubes, or wires. As in the conventional meaning of the word, a nanotube has a hollow center axis The hexacyanometallate particles 304' is smaller than the carbon 302', with a size in a range of 10 nm to 10 microns.

Fig. 8A depicts a plurality of hexacyanometallate particles bonded to each carbon form. Fig. 8B depicts a plurality of carbon forms bonded to each hexacyanometallate particle.

Conventionally, there are three steps for battery electrode fabrication. The first step is to fabricate the particles for battery electrode. In the case of AM1M2(CN)₆ particles, this includes precipitation of AM1M2(CN)₆ particles after mixing the M1ⁿ⁺ (n = 2 or 3) solution and [M2(CN)₆]^{m-} (m= 3 or 4) solution. The second step is to mix the AM1M2(CN)₆ particles with conductive carbon particles and organic binders (polytetrafluoroethylene (PTFE), polyvinylidene fluoride (PVDF), etc.) in a low boiling point solvent to form a paste. The mixing can be done by adding together all components and mixing them in a ball mill jar. The third step is to coat the paste on a metal foil as the current collector. After the drying process, the electrode can be used in electrochemical cell. However, since the particles are very small, the conductive carbon particles do not totally cover the AM1M2(CN)₆ particle.

In order to form the C-AM1M2(CN)₆ intimate contact, and to improve the electron conduction, the carbon can be added and forms intimate contact to AM1M2(CN)₆ in three scenarios: during the AM1M2(CN)₆ synthesis, after AM1M2(CN)₆ particle formation and prior to the electrode printing, and after the electrode formation and drying. Figs. 9A through 11 describe processes for forming CAM1M2(CN)₆ intimate contact.

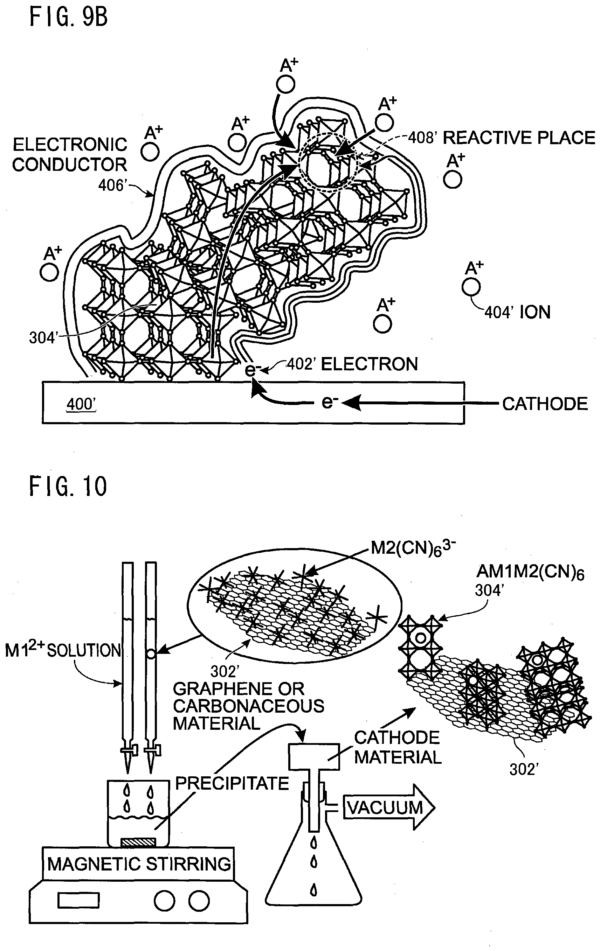

Fig. 10 is a schematic drawing depicting a one-step hexacyanometallate coating method during AM1M2(CN)₆ synthesis. An electronic conductor, for example graphene or other carbonaceous material, is dispersed in a reactant solution. In general, the electronic conductor has a large surface area to which a soluble reactant can be uniformly adsorbed. The reactants are dropped into a reactor very slowly with a strong stirring. After the reaction, AM1M2(CN)6 with a small particle size uniformly forms on the surface of the electronic conductor. In the synthesis of the Prussian blue, for example, the reaction can be simply expressed as:

Fe²⁺ + Fe(CN)₆³⁻ -□ + K⁺ → KFe(II)Fe(III)(CN)₆-□;

where □ is the electronic conductor.

More explicitly, a carbon black (surface area: 10 - 100 m²/g) is dispersed in a potassium ferricyanide solution (its concentration can be controlled at 0.0005M - 0.5 M). The ratio of potassium ferricyanide to carbon black is determined by its application. In one example, the ratio is 80:20. A water-soluble surfactant can be added into the solution in order to obtain a uniform carbon suspension. After two-hours of ultrasonic stirring, the solution is poured into a burette. In the other burette, a Fe²⁺ solution is prepared. The mole ration of Fe²⁺ to ferricyanide is 2:1. The two solutions are dripped into a beaker very slowly with strong stirring. After the solutions completely drip off, the beaker is still kept stirring for 5 hours. The product in the beaker is filtered or centrifuged. After at least three washes in deionized water, the product is dried in a vacuum drier overnight.

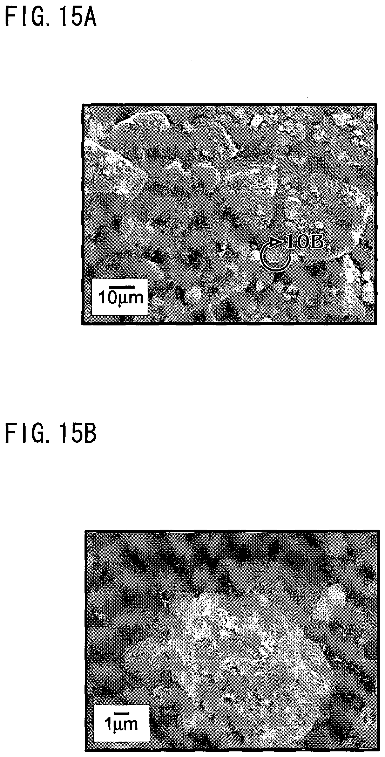

Figs. 15A and 15B are scanning electron microscope (SEM) images of KNiFe(CN)₆. As an example, KNiFe(CN)₆ was synthesized with carbon black using the above-described method. Fig. 15A shows KNiFe(CN)₆ particles uniformly coated on the surface with carbon powder. The carbon black not only improves the electronic conductivity of KNiFe(CN)₆, but it also favors the small and uniform KNiFe(CN)₆ particle formation. The electrical performance of the battery made of C-KNiFe(CN)₆ particles was compared to the battery made of KNiFe(CN)₆ particles. Fig. 15B is a more detailed image of a carbon particle.

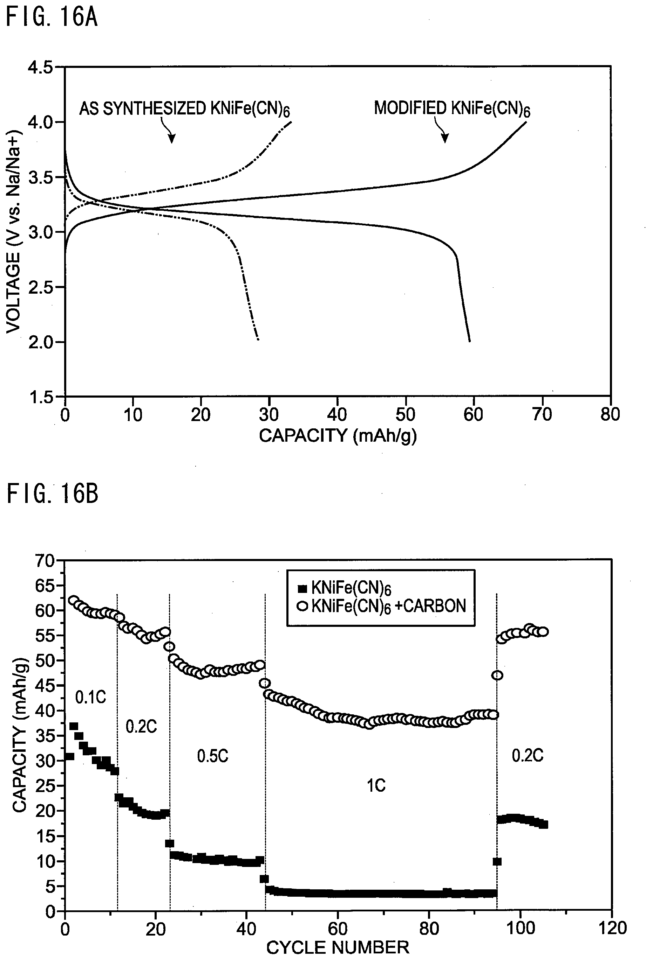

Figs. 16A and 16B depict, respectively, the charge and discharge behavior of the two batteries. For the battery made of C-KNiFe(CN)₆ particles (modified), small particle size and better conductivity improves the utilization of the electrode materials and increases specific capacities, as compared to the battery made of (as-synthesized) KNiFe(CN)₆ particles. The discharge capacity of electrode made of C-KNiFe(CN)₆ particles is about 60 mAh/g, but that of pure KNiFe(CN)₆ is smaller than 30 mAh/g. In addition, the battery made of C-KNiFe(CN)₆ particles demonstrates a capacity of about 40 mAh/g at the 1C charge rate. With the same conditions, the battery made of pure KNiFe(CN)₆ shows a very low capacity.

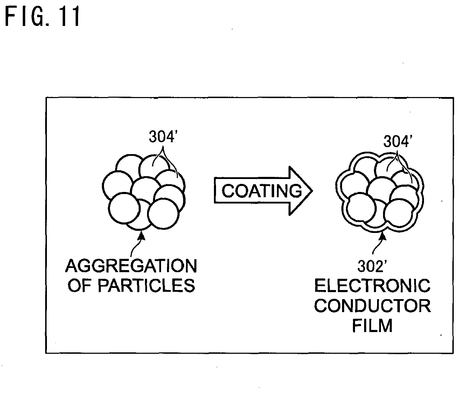

Fig. 11 is a drawing depicting a conducting film coating on AM1M1(CN)₆ particles. The C-AM1M2(CN)₆ intimate contact can be formed after AM1M2(CN)₆ particle synthesis, but prior to the to the electrode printing. Small particles of AM1M2(CN)₆ 304' can be synthesized with the reaction of M1ⁿ⁺ (n = 2 or 3) and [M2(CN)₆]^{m-} (m= 3 or 4) ions. Once the particles of AM1M2(CN)₆ are obtained, a layer of electronic conductor, such as carbon 302', can be coated on their surface using physical or chemical methods. For example, atomic layer deposition (ALD), physical vapor deposition (PVD), chemical vapor deposition (CVD), hydrothermal synthesis, or ball milling method, etc., can be used to coat the layer of electronic conductor. However, two problems are worth noting. One is that some electronic conductors have very high reductive activity, for example, carbonaceous materials that can reduce M1 and M2 from the high valence to the low valence. For example, in the process of using the hydrothermal method to coat the carbon layer on the surface of KFe(II)Fe(III)(CN)₆, the material can be reduced to K₂Fe(II)Fe(II)(CN)₆.

The other problem is the selection of the electronic conductor for the coating. After the coating process, the electronic conductor layer is covered on the particles uniformly. For the electrochemical reaction to occur on the AM1M2(CN)₆, the layer of the electronic conductor must be 'A' ion-permeable. In other words, the layer of the electronic conductor cannot retard the 'A' ion transport between the AM1M2(CN)₆ particle and the electrolyte. In some cases, the conducting film 302' does not have to be continuous so that AM1M2(CN)₆ particles have direct contact to the electrolyte and "A" ions are readily intercalating/deintecalating to the AM1M2(CN)₆ particles.

9A and 9B are drawings contrasting electron transport in uncoated and conductor-coated AM1M2(CN)₆ particles. In this aspect the conducting film can be deposited after the electrode formation. Obtaining small and uniformly distributed particle is a step to improving the electronic transport in the AM1M2(CN)₆. For clarity, an electrode 400' (cathode) is shown with only one AM1M2(CN)₆ particle 304'. In a small AM1M2(CN)₆ particle, the transport path between an electron 402' and ions 404' is shortened. The ion (A⁺) 404' conduction is through an electrolyte surrounding the AM1M2(CN)₆ particle. After going into the AM1M2(CN)₆ lattice, the A⁺ ions 404' move through the large interstitial sites in a direction towards a more negative potential. On the other hand, the electron 402' is moving within the AM1M2(CN)₆ material. The electron 402' movement in the AM1M2(CN)₆ particle 404' is basically governed by the electron conductivity behavior of the AM1M2(CN)₆ material. It is known that AM1M2(CN)₆ has low electron conductivity, which results in a slow electrochemical reaction. To improve the electron conductivity of AM1M2(CN)₆ electrode, it is possible to coat a good electronic conductor 406' on the AM1M2(CN)₆ surface. One example of good electronic conductor is carbon. The electronic conductor 406' provides a highway for the fast electrons transport as shown in Fig. 9B. In the reduction reaction of AM1M2(CN)₆, 'A'-ions diffuse to the reactive place 408' along the interstitial space, but electrons 402' can move to reactive place along the external electronic conductor 406'. Therefore, the electrochemical reaction has a small overpotential and a large current.

The A cations may be either alkali or alkaline-earth cations. For example, the A cations may be Na⁺, K⁺, Mg²⁺, or Ca²⁺. M1 is a metal with 2+ or 3+ valance positions. Likewise, M2 is a metal with 2+ or 3+ valance positions. For example, the M1 and M2 metals may be Ti, V, Cr, Mn, Fe, Co, Ni, Cu, Zn, Ca, or Mg. The M1 metal may be the same metal as the M2 metal, or a different metal than the M2 metal.

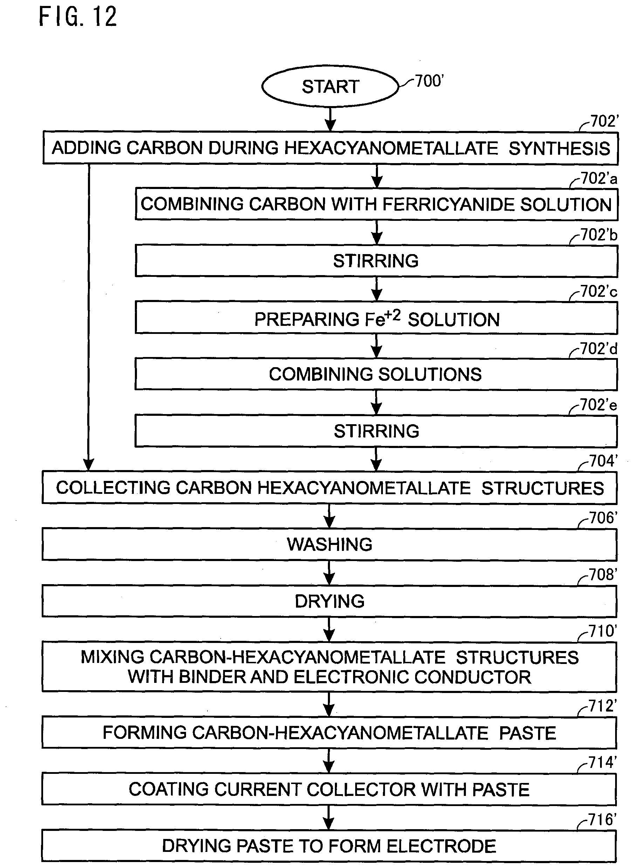

Fig. 12 is a flowchart illustrating method for forming a carbon-hexacyanometallate battery electrode in which KFe(II)Fe(III)(CN)₆ is used as an example. Although the method is depicted as a sequence of numbered steps for clarity, the numbering does not necessarily dictate the order of the steps. It should be understood that some of these steps may be skipped, performed in parallel, or performed without the requirement of maintaining a strict order of sequence. Generally however, the method follows the numeric order of the depicted steps. The method starts at Step 700'.

Step 702' adds conducting carbon during the synthesis of hexacyanometallate. The conducting carbon can be the form of a particle having a size in a range of 10 nm to 20 microns, a carbon sheet, graphene, nonoparticles, nanotubes, or wires. Step 704' collects carbon-hexacyanometallate (AM1M2(CN)₆) structures. Step 706' washes the carbon-hexacyanometallate structures in deionized water. Step 708' dries the carbon-hexacyanometallate structures. Step 710' mixes the carbon-hexacyanometallate structures with a binder and electronic conductor powder in a low boiling point solvent. Step 712' forms a carbon-AM1M2(CN)₆ paste. Step 714' coats a metal current collector with the paste. Step 716' dries the paste to form an electrode.

In one aspect, adding carbon during the synthesis of hexacyanometallate in Step 702' includes substeps. Step 702'a combines conducting carbon with a potassium ferricyanide solution, forming a first solution. Step 702'b stirs the first solution. Step 702'c prepares a Fe²⁺ solution. Step 702'd combines the Fe²⁺ solution with the first solution, forming a second solution. Step 702'e stirs the second solution. Then, Step 704' includes collecting carbon-hexacyanometallate (AM1M2(CN)₆) structures from the second solution. In one aspect, the combination of Steps 702'a and 702'e form a specific AM1M2(CN)₆ material, which may be KFeFe(CN)₆ for example. Other methods of enabling Step 702' would be known in the art.

Step 712' may form a carbon-AM1M2(CN)₆ paste with a plurality of hexacyanometallate particles bonded to each carbon form, where the bond is a physical bond or a chemical bond. Alternatively, Step 712' may form the carbon-AM1M2(CN)₆ paste with a plurality of carbon forms bonded (chemical or physical) to each hexacyanometallate particle. Either way, Step 712' forms the carbon-AM1M2(CN)₆ paste with hexacyanometallate particles have a size in the range of 10 nm to 10 microns.

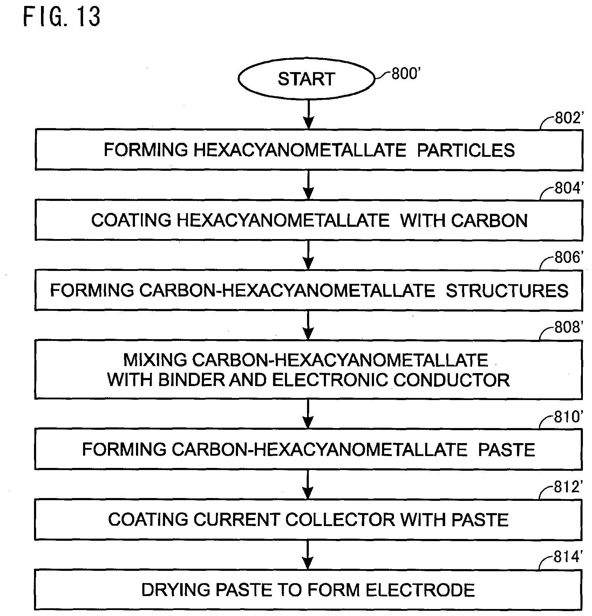

Fig. 13 is a flowchart illustrating an alternate method for forming a carbon-hexacyanometallate battery electrode. The method begins at Step 800'. Step 802' forms hexacyanometallate particles. In one aspect, the hexacyanometallate particles have a size in the range of 10 nm to 10 microns. The hexacyanometallate particles may be formed using one of the following processes: template, hydrothermal, co-deposition, or sonochemical synthesis.

Step 804' coats the hexacyanometallate particles with a conducting carbon. The conducting carbon may be in the form of particles having a size in the range of 10 nm to 20 microns, a carbon sheet, graphene, nanoparticles, nanotubes, or wires. The coating may be performed using one of the following processes: atomic layer deposition (ALD), physical vapor deposition (PVD), chemical vapor deposition (CVD), hydrothermal synthesis, or ball milling. Step 806' forms carbon-hexacyanometallate structures. Step 808' mixes the carbon-hexacyanometallate structures with a binder and electronic conductor powder in a low boiling point solvent. Step 810' forms a carbon-AM1M2(CN)₆ paste. Step 812' coats a metal current collector with the paste. Step 814' dries the paste to form an electrode.

In one aspect, forming the carbon-AM1M2(CN)₆ paste in Step 810' includes forming a paste with a plurality of carbon atoms bonded to each hexacyanometallate molecule, where the bond is a physical bond or a chemical bond.

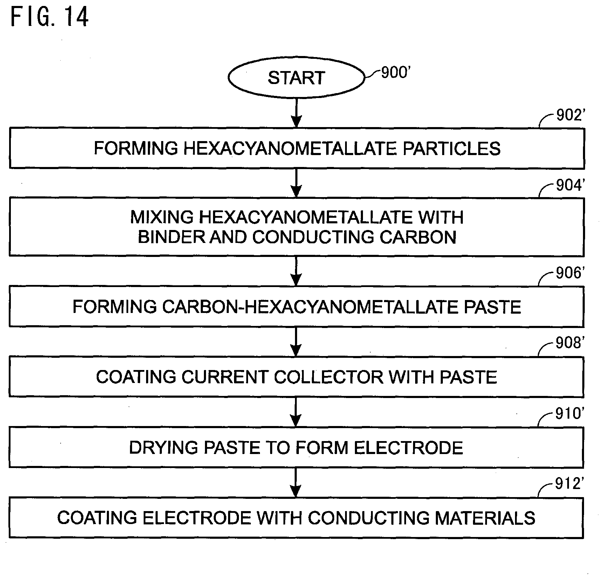

Fig. 14 is a flowchart illustrating another variation of a method for forming a carbon-hexacyanometallate battery electrode. The method begins at Step 900'. Step 902' forms hexacyanometallate particles. In one aspect, the hexacyanometallate particles have a size in the range of 10 nm to 10 microns. Step 904' mixes the hexacyanometallate particles with a binder and electronic conductor powder in a low boiling point solvent. Step 906' forms a carbon-AM1M2(CN)₆ paste. Step 908' coats a metal current collector with the paste. Step 910' dries the paste to form an electrode. Step 912' coats the electrode with a layer of conducing materials.

In one aspect, coating the electrode with the layer of conducting materials in Step 912' includes using a deposition process such as CVD, vapor phase ALD, or liquid phase coating. In another aspect, Step 912' uses a conducting material having a thickness in the range from 0.5 nm to 20 nm, where the material is either carbon or a metal material. The C-AM1M2(CN)₆ in the conducting material coating the electrode includes carbon that either fully covers or partially covers the AM1M2(CN)₆ particle surfaces.

Methods have been provided for forming a carbon-hexacyanometallate battery electrode, as well as a carbon-hexacyanometallate structure. Examples of particular materials and process steps have been presented to illustrate the invention. However, the invention is not limited to merely these examples. Other variations and embodiments of the invention will occur to those skilled in the art.

## Claims

1. A battery with a hexacyanometallate cathode and non-metal anode, the battery comprising:
a cathode with hexacyanometallate particles overlying a current collector, the hexacyanometallate particles having a chemical formula A'_{n'}AₘM1ₓM2_{y}(CN)₆, and having a Prussian Blue hexacyanometallate crystal structure,
where A cations are selected from a group consisting of alkali and alkaline-earth cations;
where A' cations are selected from a group consisting of alkali and alkaline-earth cations;
where M1 is a metal selected from a group consisting of 2+ or 3+ valance positions;
where M2 is a metal selected from a group consisting of 2+ or 3+ valance positions;
where m is in a range of 0.5 to 2;
where x is in a range of 0.5 to 1.5;
where y is in a range of 0.5 to 1.5;
where n' is in a range of 0 to 2;
an electrolyte capable of conducting A cations;
a non-metal anode; and,
an ion-permeable membrane separating the anode from the cathode,
wherein the A cations are X cations;
wherein the ion-permeable membrane is a X-ion-permeable membrane;
wherein the electrolyte is a X soluble non-aqueous electrolyte; and
X is selected from the group consisting of Na⁺, K⁺, Mg²⁺ and Ca²⁺.

2. The battery of claim 1 wherein the M1 metal is selected from a group consisting of the same metal as the M2 metal and a different metal than the M2 metal.

3. The battery of claim 1 wherein the electrolyte is selected from a group consisting of non-aqueous, organic, gel, polymer, solid electrolyte, and aqueous electrolytes.

4. The battery of claim 1 wherein the cathode hexacyanometallate particles have the chemical formula AₘM1ₓM2_{y}(CN)₆, where n' = 0.

5. The battery of claim 1 wherein the battery comprises a carbon(C) bonded to the hexacyanometallate particles; and,
wherein a bond between the carbon(C) and the hexacyanometallate particles is selected from a group consisting of a physical and a chemical bond.

6. A method for forming a hexacyanometallate battery cathode, the method comprising:
providing dried hexacyanometallate particles having a chemical formula A'ₙM1ₓM2_{y}(CN)₆ with a Prussian Blue hexacyanometallate crystal structure, including impurities and H₂O;
where A' is selected from a group consisting of alkali and alkaline-earth cations;
where M1 is a metal selected from a group consisting of 2+ and 3+ valance positions;
where M2 is a metal selected from a group consisting of 2+ and 3+ valance positions;
where n is in a range of 0.5 to 2;
where x is in a range of 0.5 to 1.5;
where y is in a range of 0.5 to 1.5;
mixing the hexacyanometallate particles with a binder and electronic conductor powder in a low boiling point solvent;
drying the mixture, forming a A'ₙM1ₓM2_{y}(CN)₆ paste;
coating a metal current collector with the paste, forming a cathode;
drying the paste;
soaking the cathode in an organic first electrolyte including a salt selected from the group consisting of alkali and alkaline-earth cations;
accepting a first electric field in the first electrolyte between the cathode and a first counter electrode;
in response to the first electric field, simultaneously removing A' cations, impurities, and water molecules from interstitial spaces in the Prussian Blue hexacyanometallate crystal structure; and,
forming hexacyanometallate particles having a chemical formula of A'ₙM1ₓM2_{y}(CN)₆, where n' < n, overlying the cathode.

7. The method of claim 6 further comprising:
subsequent to forming A'_{n'}M1ₓM2_{y}(CN)₆, soaking the cathode in an organic second electrolyte including a salt with A cations, where A is selected from a group consisting of alkali and alkaline-earth cations;
accepting a second electric field in the second electrolyte between the cathode and a second counter electrode including A elements;
in response to the second electric field, adding A cations into the interstitial spaces of the A'_{n'}M1ₓM2_{y}(CN)₆ crystal structure; and,
forming a cathode with hexacyanometallate particles having the chemical formula A'_{n'}AₘM1xM2y(CN)₆, where m is in a range of 0.5 to 2.

8. The method of claim 6 wherein mixing the hexacyanometallate particles with the binder and electronic conductor powder includes mixing with an electronic conductor powder selected from a group consisting of carbon black, carbon nanotubes, carbon nanowire, and grapheme, having a particle size in a range of 5 nm to 10 microns.

9. The method of claim 6 wherein providing dried hexacyanometallate particles having a chemical formula A'ₙM1ₓM2_{y}(CN)₆ with a Prussian Blue hexacyanometallate crystal structure, including impurities and H₂O includes:
adding a conducting carbon during the synthesis of hexacyanometallate;
collecting carbon-hexacyanometallate(A'ₙM1ₓM2_{y}(CN)₆) structures;
washing the carbon-hexacyanometallate(A'ₙM1ₓM2_{y}(CN)₆) structures in deionized water; and,
drying the carbon-hexacyanometallate structures.

## Patentansprüche

1. Batterie mit einer Hexacyanometallat-Kathode und einer Nichtmetall-Anode, wobei die Batterie umfasst:
eine Kathode mit Hexacyanometallat-Partikeln, die einen Stromkollektor überlagern, wobei die Hexacyanometallat-Partikel eine chemische Formel A'_{n'}AₘM1ₓM2_{y}(CN)₆ haben und eine Kristallstruktur aus Hexacyanometallat und Preußischblau aufweisen,
wo A-Kationen aus einer Gruppe ausgewählt werden, die aus Alkali- und Erdalkali-Kationen besteht;
wo A'-Kationen aus einer Gruppe ausgewählt werden, die aus Alkali- und Erdalkali-Kationen besteht;
wo M1 ein Metall ist, das aus einer Gruppe ausgewählt wird, die aus 2+ oder 3+ Valenzpositionen besteht;
wo M2 ein Metall ist, das aus einer Gruppe ausgewählt wird, die aus 2+ oder 3+ Valenzpositionen besteht;
wo m in einem Bereich von 0,5 bis 2 liegt;
wo x in einem Bereich von 0,5 bis 1,5 liegt;
wo y in einem Bereich von 0,5 bis 1,5 liegt;
wo n' in einem Bereich von 0 bis 2 liegt;
einen Elektrolyt, der A-Kationen leiten kann;
eine Nichtmetall-Anode; und
eine ionendurchlässige Membran, die die Anode von der Kathode trennt, wobei
die A-Kationen X-Kationen sind;
wobei die ionendurchlässige Membran eine X-ionendurchlässige Membran ist;
wobei der Elektrolyt ein X-löslicher, nichtwässriger Elektrolyt ist; und
X aus der aus Na⁺, K⁺, Mg²⁺ und Ca²⁺ bestehenden Gruppe ausgewählt ist.

2. Batterie nach Anspruch 1, wobei das M1-Metall aus einer Gruppe ausgewählt ist, die aus dem gleichen Metall wie das M2-Metall und einem vom M2-Metall verschiedenen Metall besteht.

3. Batterie nach Anspruch 1, wobei der Elektrolyt aus einer Gruppe ausgewählt ist, die aus einem nicht wässrigen, organischen, Gel-, Polymer-, Festelektrolyt und wässrigen Elektrolyten besteht.

4. Batterie nach Anspruch 1, wobei die Hexacyanometallat-Partikel der Kathode die chemische Formel AₘM1ₓM2_{y}(CN)₆ haben, wobei n' = 0 ist.

5. Batterie nach Anspruch 1, wobei die Batterie einen an die Hexacyanometallat-Partikel gebundenen Kohlenstoff (C) umfasst; und
wobei eine Bindung zwischen dem Kohlenstoff (C) und den Hexacyanometallat-Partikeln aus einer Gruppe ausgewählt ist, die aus einer physikalischen und einer chemischen Bindung besteht.

6. Verfahren zum Ausbilden einer Hexacyanometallat-Batteriekathode, wobei das Verfahren umfasst:
Vorsehen getrockneter Hexacyanometallat-Partikel mit einer chemischen Formel A'ₙM1ₓM2_{y}(CN)₆ mit einer Kristallstruktur aus Hexacyanometallat und Preußischblau, einschließlich Verunreinigungen und H₂O;
wo A' aus einer Gruppe ausgewählt wird, die aus Alkali- und Erdalkali-Kationen besteht;
wo M1 ein Metall ist, das aus einer Gruppe ausgewählt wird, die aus 2+ oder 3+ Valenzpositionen besteht;
wo M2 ein Metall ist, das aus einer Gruppe ausgewählt wird, die aus 2+ oder 3+ Valenzpositionen besteht;
wo n in einem Bereich von 0,5 bis 2 liegt;
wo x in einem Bereich von 0,5 bis 1,5 liegt;
wo y in einem Bereich von 0,5 bis 1,5 liegt;
Mischen der Hexacyanometallat-Partikel mit einem Bindemittel und einem Pulver eines elektronischen Leiters in einem Lösungsmittel mit niedrigem Siedepunkt;
Trocknen des Gemischs, wobei eine A'ₙM1ₓM2_{y}(CN)₆-Paste gebildet wird;
Beschichten eines Metall-Stromkollektors mit der Paste, wobei eine Kathode gebildet wird;
Trocknen der Paste;
Durchtränken der Kathode in einem organischen ersten Elektrolyten, der ein Salz enthält, das aus der aus Alkali- und Erdalkali-Kationen bestehenden Gruppe ausgewählt wird;
Anlegen eines ersten elektrischen Feldes in dem ersten Elektrolyten zwischen der Kathode und einer ersten Gegenelektrode;
als Antwort auf das erste elektrische Feld, gleichzeitiges Entfernen von A'-Kationen, Verunreinigungen und Wassermolekülen aus Zwischengitterräumen in der Kristallstruktur aus Hexacyanometallat und Preußischblau; und
Bilden von Hexacyanometallat-Partikeln mit einer chemischen Formel A'_{n'}M1ₓM2_{y}(CN)₆, wobei n' < n gilt, die die Kathode überlagern.

7. Verfahren nach Anspruch 6, ferner umfassend:
nach einem Ausbilden von A'_{n'}M1ₓM2_{y}(CN)₆, Durchtränken der Kathode in einem organischen zweiten Elektrolyten, der ein Salz mit A-Kationen enthält, wobei A aus einer aus Alkali- und Erdalkali-Kationen bestehenden Gruppe ausgewählt wird;
Anlegen eines zweiten elektrischen Feldes in dem zweiten Elektrolyten zwischen der Kathode und einer A-Elemente enthaltenden zweiten Gegenelektrode;
als Antwort auf das zweite elektrische Feld, Hinzufügen von A-Kationen in die Zwischengitterräume der A'ₙM1ₓM2_{y}(CN)₆-Kristallstruktur; und
Bilden einer Kathode mit Hexacyanometallat-Partikeln mit der chemischen Formel A'ₙAₘM1ₓM2_{y}(CN)₆, wobei m in einem Bereich von 0,5 bis 2 liegt.

8. Verfahren nach Anspruch 6,
wobei ein Mischen der Hexacyanometallat-Partikel mit dem Bindemittel und Pulver eines elektronischen Leiters ein Mischen mit einem Pulver eines elektronischen Leiters einschließt, das aus einer Gruppe ausgewählt wird, die aus Ruß, Kohlenstoff-Nanoröhren, Kohlenstoff-Nanodraht und Graphen besteht, mit einer Partikelgröße in einem Bereich von 5 nm bis 10 Mikrometer.

9. Verfahren nach Anspruch 6,
wobei ein Vorsehen getrockneter Hexacyanometallat-Partikel mit einer chemischen Formel A'ₙM1ₓM2_{y}(CN)₆ mit einer Kristallstruktur aus Hexacyanometallat und Preußischblau, einschließlich Verunreinigungen und H₂O, umfasst:
Hinzufügen eines leitenden Kohlenstoffs während der Synthese von Hexacyanometallat;
Sammeln von Kohlenstoff-Hexacyanometallat-(A'ₙM1ₓM2_{y}(CN)₆)-Strukturen;
Waschen der Kohlenstoff-Hexacyanometallat-(A'ₙM1ₓM2_{y}(CN)₆)-Strukturen in entionisiertem Wasser; und
Trocken der Kohlenstoff-Hexacyanometallat-Strukturen.

## Revendications

1. Batterie avec une cathode en hexacyanométallate et une anode non métallique, la batterie comprenant :
une cathode avec des particules d'hexacyanométallate recouvrant un collecteur de courant, les particules d'hexacyanométallate répondant à la formule chimique A'_{n'}AₘM1ₓM2_{y}(CN)₆, et présentant une structure cristalline d'hexacyanométallate de bleu de Prusse,
dans laquelle les cations A sont choisis dans l'ensemble constitué par les cations alcalins et alcalino-terreux ;
dans laquelle les cations A' sont choisis dans l'ensemble constitué par les cations alcalins et alcalino-terreux ;
dans laquelle M1 est un métal choisi dans l'ensemble constitué par les positions de valence 2+ et 3+ ;
dans laquelle M2 est un métal choisi dans l'ensemble constitué par les positions de valence 2+ et 3+ ;
dans laquelle m est situé dans la plage allant de 0,5 à 2 ;
dans laquelle x est situé dans la plage allant de 0,5 à 1,5 ;
dans laquelle y est situé dans la plage allant de 0,5 à 1,5 ;
dans laquelle n'est situé dans la plage allant de 0 à 2 ;
un électrolyte capable de conduire les cations A ;
une anode non métallique ; et
une membrane perméable aux ions séparant l'anode de la cathode ;
dans laquelle les cations A sont des cations X ;
dans laquelle la membrane perméable aux ions est une membrane perméable aux ions X ;
dans laquelle l'électrolyte est un électrolyte non aqueux soluble dans X ; et
dans laquelle X est choisi dans l'ensemble constitué par Na⁺, K⁺, Mg²⁺ et Ca²⁺.

2. Batterie selon la revendication 1, dans laquelle le métal M1 est choisi dans l'ensemble constitué par le même métal que le métal M2 et un métal différent du métal M2.

3. Batterie selon la revendication 1, dans laquelle l'électrolyte est choisi dans l'ensemble constitué par les électrolytes non aqueux, organiques, en gel, polymères, solides, et aqueux.

4. Batterie selon la revendication 1, dans laquelle les particules d'hexacyanométallate de cathode répondent à la formule chimique AₘM1ₓM2_{y}(CN)₆, où n' = 0.

5. Batterie selon la revendication 1, laquelle batterie comprend un carbone (C) lié aux particules d'hexacyanométallate ; et
dans laquelle une liaison entre le carbone (C) et les particules d'hexacyanométallate est choisi dans le groupe constitué par les liaisons physiques et chimiques.

6. Procédé pour former une cathode de batterie en hexacyanométallate, le procédé comprenant :
l'obtention de particules d'hexacyanométallate séchées répondant à la formule chimique A'ₙM1ₓM2_{y}(CN)₆, présentant une structure cristalline d'hexacyanométallate de bleu de Prusse, comprenant des impuretés et H₂O ;
dans laquelle A' est choisi dans l'ensemble constitué par les cations alcalins et alcalino-terreux ;
dans laquelle M1 est un métal choisi dans l'ensemble constitué par les positions de valence 2+ et 3+ ;
dans laquelle M2 est un métal choisi dans l'ensemble constitué par les positions de valence 2+ et 3+ ;
dans laquelle n est situé dans la plage allant de 0,5 à 2 ;
dans laquelle x est situé dans la plage allant de 0,5 à 1,5 ;
dans laquelle y est situé dans la plage allant de 0,5 à 1,5 ;
le mélange des particules d'hexacyanométallate avec un liant et une poudre de conducteur électronique dans un solvant à bas point d'ébullition ;
le séchage du mélange, ce qui forme une pâte d'A'ₙM1ₓM2_{y}(CN)₆ ;
le revêtement du collecteur de courant métallique avec la pâte, ce qui forme une cathode ;
le séchage de la pâte ;
l'immersion de la cathode dans un premier électrolyte organique comprenant un sel choisi dans l'ensemble constitué par les cations alcalins et alcalino-terreux ;
l'acceptation d'un premier champ électrique dans le premier électrolyte entre la cathode et une première contre-électrode ;
en réponse au premier champ électrique, simultanément l'élimination des cations A', des impuretés, et des molécules d'eau dans les espaces interstitiels dans la structure cristalline d'hexacyanométallate de bleu de Prusse ; et
la formation de particules d'hexacyanométallate répondant à la formule chimique A'_{n'}M1ₓM2_{y}(CN)₆, où n' < n, recouvrant la cathode.

7. Procédé selon la revendication 6, comprenant en outre :
suite à la formation d'A'_{n'}M1ₓM2_{y}(CN)₆, l'immersion de la cathode dans un deuxième électrolyte organique comprenant un sel avec des cations A, où A est choisi dans l'ensemble constitué par les cations alcalins et alcalino-terreux ;
l'acceptation d'un deuxième champ électrique dans le deuxième électrolyte entre la cathode et une deuxième contre-électrode comprenant des éléments A ;
en réponse au deuxième champ électrique, l'addition de cations A dans les espaces interstitiels de la structure cristalline d'A'_{n'}M1ₓM2_{y}(CN)₆ ; et
la formation d'une cathode avec des particules d'hexacyanométallate répondant à la formule chimique A'_{n'}AₘM1ₓM2_{y}(CN)₆ où m est situé dans la plage allant de 0,5 à 2.

8. Procédé selon la revendication 6, dans lequel le mélange des particules d'hexacyanométallate avec le liant et la poudre de conducteur électronique comprend un mélange avec une poudre de conducteur électronique choisie dans l'ensemble constitué par le noir de carbone, les nanotubes de carbone, les nanofils de carbone, et le graphène, présentant une granulométrie située dans la plage allant 5 nm à 10 micromètres.

9. Procédé selon la revendication 6, dans lequel l'obtention de particules d'hexacyanométallate séché répondant à la formule chimique A'ₙM1ₓM2_{y}(CN)₆ et présentant une structure cristalline d'hexacyanométallate de bleu de Prusse, comprenant des impuretés et H₂O, comprend :
l'addition d'un carbone conducteur durant la synthèse de l'hexacyanométallate ;
la collecte de structures d'hexacyanométallate de carbone (A'ₙM1ₓM2_{y}(CN)₆) ;
le lavage des structures d'hexacyanométallate de carbone (A'ₙM1ₓM2_{y}(CN)₆) dans de l'eau désionisée ; et
le séchage des structures d'hexacyanométallate de carbone.
